# EUROPEAN PATENT APPLICATION

(11) **EP 3 476 635 A1**
(43) Date of publication of application: **01.05.2019**
(21) Application number: 17818958.5
(22) Date of filing: 11.05.2017
(51) Int. Cl.: B60K 6/36, B60K 17/08, B60K 17/16

(54) **POWER DRIVE SYSTEM AND VEHICLE**

(30) Priority: 29.06.2016 CN 201620680674 U
(71) Applicant: BYD Company Limited, Shenzhen, Guangdong 518118 (CN)
(72) Inventor: LIAN, Yubo, Shenzhen Guangdong 518118 (CN); LING, Heping, Shenzhen Guangdong 518118 (CN); ZHAI, Zhen, Shenzhen Guangdong 518118 (CN); XU, Youbin, Shenzhen Guangdong 518118 (CN)
(74) Representative: Hoffmann Eitle
(86) International application number: PCT/CN2017/084026
(87) International publication number: WO 2018/000961

(57) **Abstract**

The present disclosure discloses a power drive system and a vehicle, the power drive system including: an engine; a transmission having a transmission power output portion; a first electric generator, the engine and the first electric generator being connected through the transmission by means of power coupling; and a differential having a differential power input portion and two differential power output portions, the differential power input portion being linked with the transmission power output portion, each of the differential power output portions being connected with a wheel on the same side, and a power engagement device being provided between one of the differential power output portions and the wheel on the same side.

## Description

### FIELD

The present disclosure relates to the technical field of automobiles, and in particular, to a power drive system and a vehicle.

### BACKGROUND

With the increasing consumption of resources, the development and utilization of new energy vehicles have become an increasing tendency. As one of the new energy vehicles, a hybrid electric vehicle is driven by an engine and/or a motor, has a plurality of driving modes, and thus may improve transmission efficiency and fuel economy.

However, in related technologies learned by the inventor, a transmission in the hybrid electric vehicle has a complex structure, less transmission modes, and lower transmission efficiency in an electric-only mode.

### SUMMARY

The present disclosure aims at resolving one of technical problems in related technologies to some extent. To this end, the present disclosure provides a power drive system, which may implement parking electricity generation, and thus has more working modes and may improve the power performance and economy of a vehicle.

The present disclosure further provides a vehicle.

The power drive system for a vehicle according to the present disclosure includes: an engine; a transmission having a transmission power output portion; a first electric generator, the engine and the first electric generator being connected through the transmission by means of power coupling; and a differential having a differential power input portion and two differential power output portions, the differential power input portion being linked with the transmission power output portion, each of the differential power output portions being connected with a wheel on the same side, and a power engagement device being provided between one of the differential power output portions and the wheel on the same side.

The power drive system according to the present disclosure may implement a parking electricity generation mode, and thus may enrich the working modes of the power drive system and improve the power performance and economy of the vehicle.

Additionally, the power drive system according to the present disclosure may also have the following distinguishing technical features.

In some examples of the present disclosure, the power engagement device is a synchronizer.

In some examples of the present disclosure, the power engagement device is a clutch.

In some examples of the present disclosure, the first electric generator is linked with the differential power input portion.

In some examples of the present disclosure, the transmission includes: a plurality of input shafts, the engine being configured to be selectively engaged with at least one of the plurality of input shafts each provided with a gear driving gear; a plurality of output shafts each provided with a gear driven gear, a plurality of gear driven gears being meshed with a plurality of gear driving gears correspondingly; a reverse shaft provided with a first gear for the reverse shaft, the first gear for the reverse shaft being meshed with one of the gear driving gears; and a reverse output gear linked with the reverse shaft.

In some examples of the present disclosure, the reverse shaft is provided with a first motor gear, with which the first electric generator is linked.

In some examples of the present disclosure, the first gear for the reverse shaft is idly mounted on the reverse shaft.

In some examples of the present disclosure, the power drive system further includes: a first synchronizer for the reverse shaft to be engaged with the reverse shaft and the first gear for the reverse shaft.

In some examples of the present disclosure, the reverse output gear is fixed on one of the output shafts.

In some examples of the present disclosure, the first gear for the reverse shaft is fixed on the reverse shaft.

In some examples of the present disclosure, the reverse output gear is idly mounted on one of the output shafts and the reverse output gear is configured to be engageable with the one of the output shafts.

In some examples of the present disclosure, the power drive system further includes: a reverse-gear synchronizer to be engaged with the reverse output gear and the one of the output shafts.

In some examples of the present disclosure, the reverse output gear shares the reverse-gear synchronizer with an adjacent gear driven gear.

In some examples of the present disclosure, the reverse shaft is fixedly provided with a second gear for the reverse shaft, which is meshed with the reverse output gear.

In some examples of the present disclosure, each of the output shafts is fixedly provided with an output gear for the output shaft, which is meshed with the differential power input portion and constitutes the transmission power output portion.

In some examples of the present disclosure, the transmission includes: a plurality of input shafts, the engine being configured to be selectively engaged with at least one of the plurality of input shafts each provided with a gear driving gear; a plurality of output shafts each provided with a gear driven gear, a plurality of gear driven gears being meshed with a plurality of gear driving gears correspondingly; and a reverse shaft idly arranged with a first gear for the reverse shaft engageable with the reverse shaft, the first gear for the reverse shaft being linked with one of the gear driving gears, where the plurality of output shafts and the reverse shaft are linked with the differential power input portion respectively.

In some examples of the present disclosure, each of the output shafts is fixedly provided with an output gear for the output shaft, the reverse shaft is fixedly provided with an output gear for the reverse shaft, the output gear for the output shaft and the output gear for the reverse shaft are meshed with the differential power input portion respectively, and the output gear for the output shaft and the output gear for the reverse shaft constitute the transmission power output portion.

In some examples of the present disclosure, the reverse shaft is fixedly provided with a first motor gear, which is linked with the first electric generator.

In some examples of the present disclosure, the power drive system further includes: a first synchronizer for the reverse shaft to be engaged with the reverse shaft and the first gear for the reverse shaft.

In some examples of the present disclosure, an intermediate idle gear is provided between the first gear for the reverse shaft and the one of the gear driving gears.

In some examples of the present disclosure, the intermediate idle gear is a dual gear and idly mounted on one of the output shafts.

In some examples of the present disclosure, the power drive system further includes: a second electric generator configured to be linked with the engine.

In some examples of the present disclosure, the power drive system further includes: a dual clutch having an input end, a first output end, and a second output end, the input end being selectively engaged with at least one of the first output end and the second output end, and the engine being connected with the input end.

In some examples of the present disclosure, the input end is provided with external teeth for the input end, with which the second electric generator is linked.

In some examples of the present disclosure, the input shafts include: a first input shaft and a second input shaft sheathed on the first input shaft, the first input shaft being connected with the first output end, and the second input shaft being connected with the second output end; and the output shafts include: a first output shaft and a second output shaft.

The vehicle according to the present disclosure includes the described power drive system.

The vehicle and the power drive system have the same beneficial effects, which will not be described here in detail.

### BRIEF DESCRIPTION OF THE DRAWINGS

FIG. 1 is a schematic diagram of a power drive system according to an embodiment of the present disclosure;
FIG. 2 is a schematic diagram of a power drive system according to another embodiment of the present disclosure;
FIG. 3 is a schematic diagram of a power drive system according to a further embodiment of the present disclosure;
FIG. 4 is a schematic diagram of a power drive system according to still another embodiment of the present disclosure;
FIG. 5 is a schematic diagram of a power drive system according to still another embodiment of the present disclosure;
FIG. 6 is a schematic diagram of a power drive system according to still another embodiment of the present disclosure;
FIG. 7 is a schematic diagram of a power drive system according to a further embodiment of the present disclosure;
FIG. 8 is a schematic diagram of a power drive system according to still another embodiment of the present disclosure;
FIG. 9 is a schematic diagram of a power drive system according to still another embodiment of the present disclosure;
FIG. 10 is a schematic diagram of a power drive system according to still another embodiment of the present disclosure;
FIG. 11 is a schematic diagram of a power drive system according to still another embodiment of the present disclosure; and
FIG. 12 is a schematic diagram of a power drive system according to still another embodiment of the present disclosure.

### DETAILED DESCRIPTION

The embodiments of the present disclosure are described in detail below. Examples of the embodiments are illustrated in the accompanying drawings. The embodiments described below with reference to the accompanying drawings are exemplary, and are used for explaining rather than limiting the present disclosure.

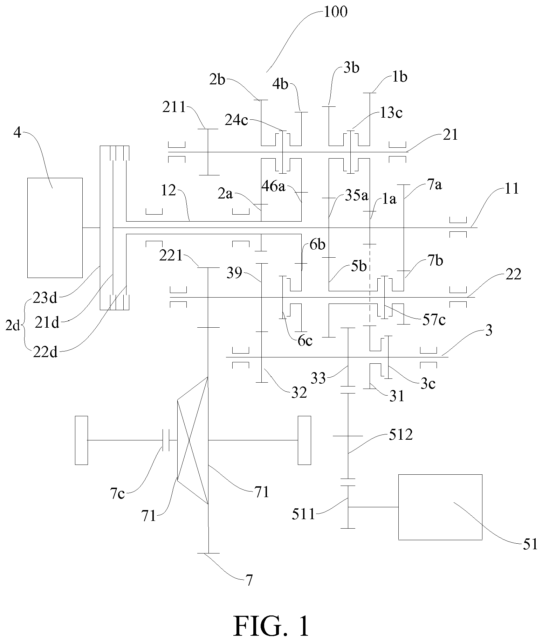

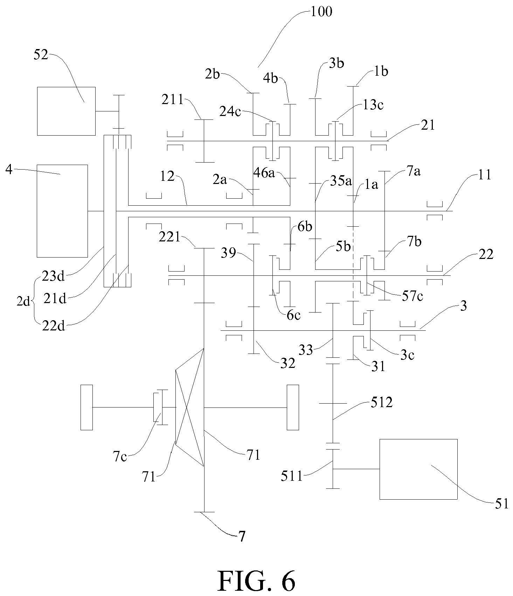

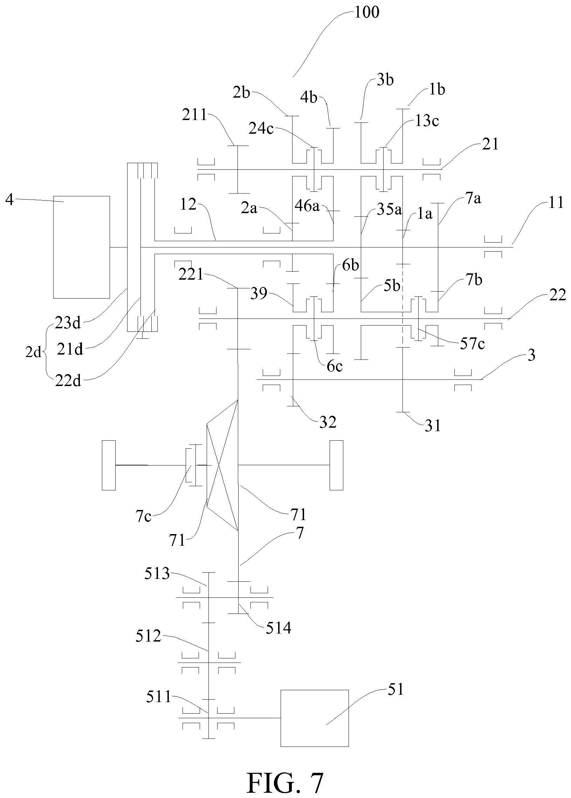

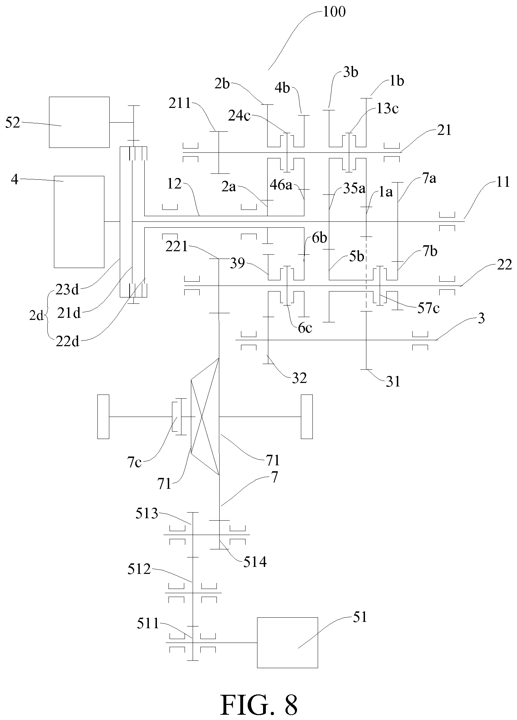

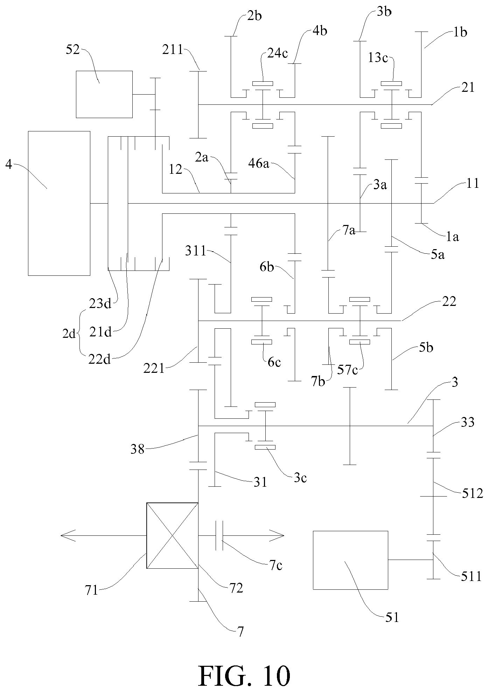

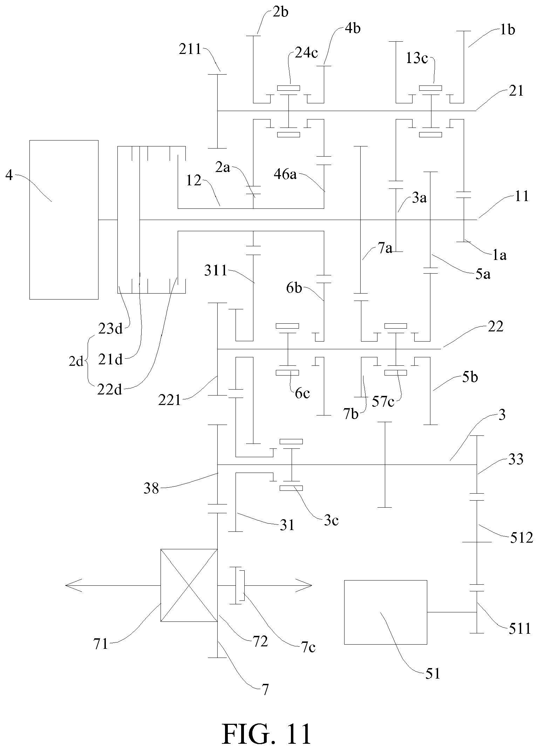

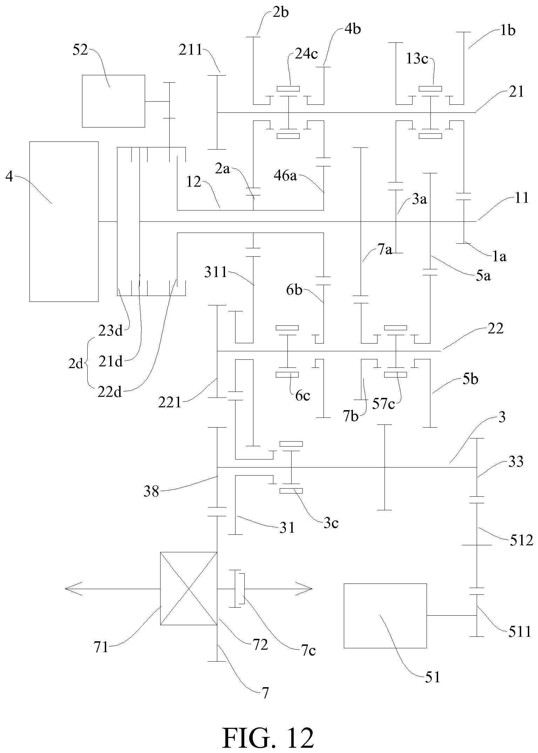

A power drive system 100 according to embodiments of the present disclosure is described below in detail in combination with FIG. 1 to FIG. 12, and the power drive system 100 is applicable to vehicles such as hybrid electric vehicles and provides sufficient power and electric energy for normal driving of a vehicle as a power system of the vehicle.

The power drive system 100 according to the embodiments of the present disclosure mainly includes two major parts, one may be a power source, which may be an engine 4, an electric generator or the like, and the other may be a transmission (including a plurality of input shafts, a plurality of output shafts, gear pairs, etc.), which is used to implement a function of performing speed shifting on power output by the power source so as to satisfy a travelling requirement or a charging requirement or the like for the vehicle.

For example, in some embodiments, as shown in FIG. 1 to FIG. 12, the power drive system 100 may include an engine 4, a first electric generator 51, a transmission, and a differential, where the engine 4 and the first electric generator 51 are connected through the transmission by means of power coupling, and then output power to a wheel through the differential so as to drive the vehicle to move. However, the present disclosure is not limited thereto.

The transmission has a transmission power output portion for outputting power, the differential has a differential power input portion and two differential power output portions, the differential power input portion is linked with the transmission power output portion, each of the differential power output portions is connected with a wheel on the same side, and a power engagement device 7c is provided between one of the differential power output portions and the wheel on the same side. It should be understood that when power is transferred to the differential power input portion, the differential power input portion may transfer the power to the two differential power output portions respectively, one of the differential power output portions transfers the power to the wheel, and the other of the differential power output portions transfers the power to the wheel when the power engagement device 7c is in an engaged state, where the differential power input portion may be a differential power input gear 7, the transmission power input portion may be a plurality of output gears for the output shaft on a plurality of output shafts and an output gear for a reverse output gear 39 of the reverse shaft 3 in the transmission, the plurality of output gears for the output shaft is meshed with the differential power input portion respectively, the differential power output portion may be a differential power output gear 71, and two differential power output gears 71 are meshed with the differential power input gear 7 respectively.

As shown in combination with FIG. 1 to FIG. 12, in some embodiments, the transmission mainly includes a plurality of input shafts (for example, a first input shaft 11, a second input shaft 12), a plurality of output shafts (for example, a first output shaft 21, a second output shaft 22), a reverse shaft 3, an output gear for the output shaft, and related gears as well as gear shift elements (such as synchronizers) on various shafts.

When power transfer is performed between the engine 4 and the input shafts, the engine 4 is configured to be selectively engaged with at least one of the plurality of input shafts. In other words, for example, when the engine 4 transmits power to the input shafts, the engine 4 can be selectively engaged with one of the plurality of input shafts so as to transmit power, or the engine 4 can also be selectively engaged with two or more of the plurality of input shafts simultaneously so as to transmit power.

For example, in examples of FIG. 1 to FIG. 12, the plurality of shafts may include two input shafts, that is, a first input shaft 11 and a second input shaft 12, and the engine 4 can be selectively engaged with one of the first input shaft 11 and the second input shaft 12 so as to transmit power. Or, in particular, the engine 4 can also be engaged with the first input shaft 11 and the second input shaft 12 simultaneously so as to transmit power. Of course, it should be understood that the engine 4 may also be disengaged from the first input shaft 11 and the second input shaft 12 simultaneously.

For a person of ordinary skill in the art, an engagement state of the engine 4 with the input shafts is related to specific working conditions of the power drive system 100, which will be described below in detail in combination with specific embodiments and will not be described here in detail.

Transmission may be performed between the input shafts and the output shafts through gear pairs. For example, each of the input shafts is provided with a gear driving gear, each of the output shafts is provided with a gear driven gear, and a plurality of gear driven gears is meshed with a plurality of gear driving gears correspondingly, so as to constitute a plurality of gear pairs of different speed ratios.

In some embodiments of the present disclosure, as shown in FIG. 1 to FIG. 12, the power drive system 100 may have seven forward gear pairs, that is, a first gear pair, a second gear pair, a third gear pair, a fourth gear pair, a fifth gear pair, a sixth gear pair, and a seventh gear pair, and the power drive system 100 also has a reverse gear pair.

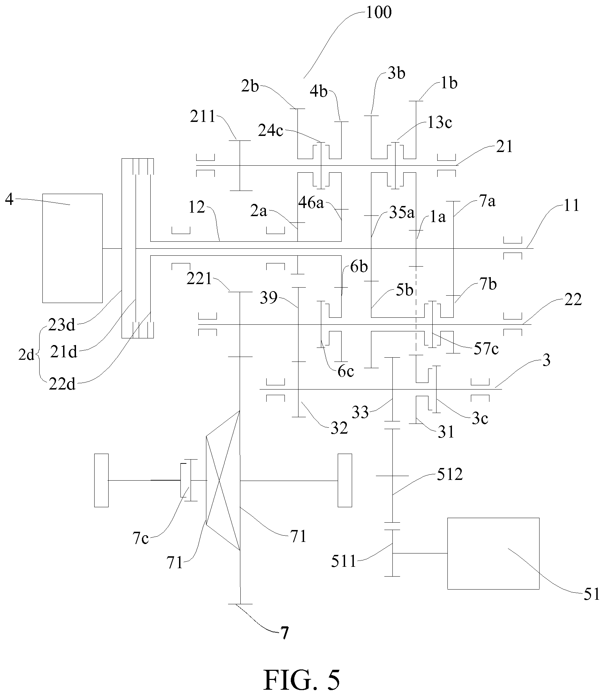

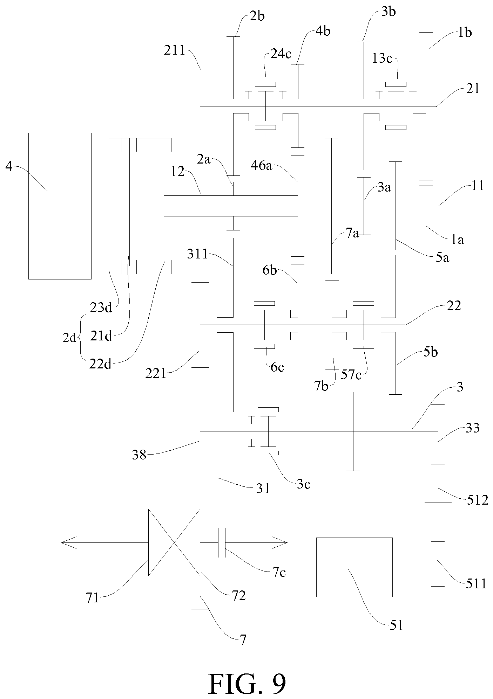

There are a plurality of types and arrangement forms of the power engagement device 7c, which are described below in detail. As shown in FIG. 1 to FIG. 8, the power engagement device 7c may be arranged between a left wheel and a differential power output gear 71 on the left side, and as shown in FIG. 9 to FIG. 12, the power engagement device 7c may be arranged between a right wheel and a differential power output gear 71 on the right side. As shown in FIG. 1 to FIG. 4, FIG. 9, and FIG. 10, the power engagement device 7c may be a clutch, and as shown in FIG. 5 to FIG. 8, FIG. 11, and FIG. 12, the power engagement device 7c is a synchronizer.

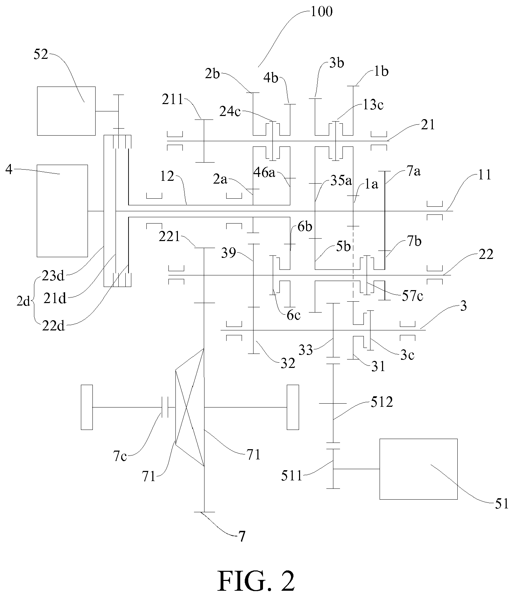

There are also a plurality of electric generators and arrangement forms thereof, for example, as shown in FIG. 1, the power drive system 100 only has the first electric generator 51 therein, and as shown in FIG. 2, the power drive system 100 has the first electric generator 51 and a second electric generator 52 therein.

As shown in FIG. 1 to FIG. 12, the first electric generator 51 is linked with the differential power input portion. There are a plurality of arrangement forms of linkage between the first electric generator 51 and the differential power input gear 7 (that is, the differential power input portion), which are described below in detail.

The first electric generator 51 is linked with a differential power input gear 7 of the vehicle. In other words, power transfer may be performed between the first electric generator 51 and the differential power input gear 7 of the vehicle, when the first electric generator 51 is used as a motor, power of the first electric generator 51 may be transferred to a wheel through the differential power input gear 7 so as to drive the vehicle to move, and when the first electric generator 51 is used as a generator, energy transferred from the wheel may be transferred to the first electric generator 51 through the differential power input gear 7 so as to enable the first electric generator 51 to generate electricity.

For example, in embodiments of FIG. 1, FIG. 2, FIG. 5, FIG. 6, and FIG. 9 to FIG. 12, the power of the first electric generator 51 is output to the differential power input gear 7 through the transmission, that is, in these embodiments, the first electric generator 51 is connected with the transmission directly by means of power coupling, and meanwhile, the first electric generator 51 is linked with the differential input gear 7 indirectly through the transmission.

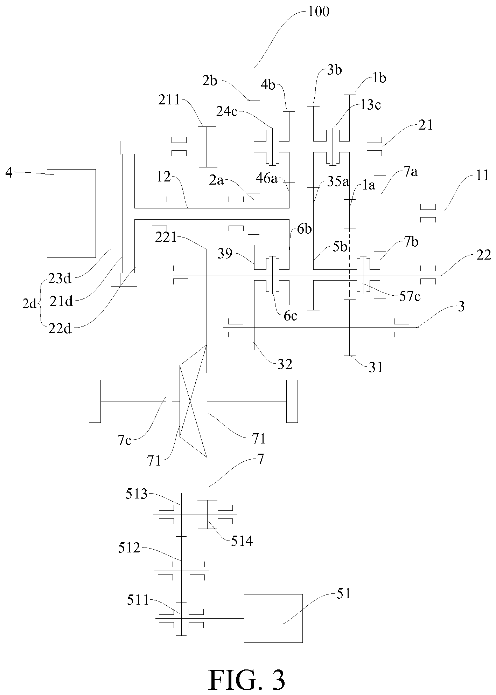

However, the present disclosure is not limited thereto. In embodiments of FIG. 3, FIG. 4, FIG. 7, and FIG. 8, the first electric generator 51 is linked with the differential power input gear 7 through a gear set, that is, in these embodiments, the first electric generator 51 is linked with the differential input gear 7 directly (rather than through the transmission), and meanwhile, the first electric generator 51 is connected with the transmission indirectly through the differential power input gear 7 by means of power coupling.

A plurality of output shafts is linked with the differential power input gear 7 of the vehicle, where an output gear is fixedly disposed on each of the output shafts, which is meshed with the differential power input gear 7, for example, as shown in FIG. 1, the plurality of output shafts includes a first output shaft 21 and a second output shaft 22, the first output shaft 21 is fixedly provided with an output gear for the first output shaft 211, the second output shaft 22 is fixedly provided with an output gear for the second output shaft 221, the output gear for the first output shaft 211 and the output gear for the second output shaft 221 are meshed with the differential power input gear 7 of the vehicle respectively, and the output gear for the first output shaft 211 and the output gear for the second output shaft 221 constitute the transmission power output portion. Therefore, power transferred from the engine 4 may be transferred to the differential power input gear 7 through the output gear for the first output shaft 211 on the first output shaft 21, the power transferred from the engine 4 may also be transferred to the differential power input gear 7 through the output gear for the second output shaft 221, or the power transferred from the engine 4 may also be transferred to the differential power input gear 7 through the output gears of the two output shafts mentioned above.

As shown in FIG. 1, the first electric generator 51 is linked with the reverse shaft 3, which is linked with the second output shaft 22 through the reverse output gear 39, so that the first electric generator 51 may be linked with the differential power input gear 7. Specifically, the reverse shaft 3 is also fixedly provided with a first motor gear 33, and transmission is performed between the first electric generator 51 and the first motor gear 33 through a first transmission gear 511 and a second transmission gear 512, where the first transmission gear 511 is fixed on a generator shaft of the first electric generator 51, and the second transmission gear 512 is meshed between the first transmission gear 511 and the first motor gear 33.

As shown in FIG. 3, the first electric generator 51 is configured to be linked with the differential power input gear 7 directly through a plurality of gears, the first transmission gear 511, the second transmission gear 512, a third transmission gear 513, and a fourth transmission gear 514 are provided between the first electric generator 51 and the differential power input gear 7, the first transmission gear 511 is fixed on the generator shaft of the first electric generator 51, and the second transmission gear 512 is meshed between the first transmission gear 511 and the third transmission gear 513, where the third transmission gear 513 and the fourth transmission gear 514 are axially and fixedly arranged, and the fourth transmission gear 514 is meshed with the differential power input gear 7.

Arrangement forms of the second electric generator 52 are described below in detail in combination with FIG. 2, and as shown in FIG. 2, the second electric generator 52 is configured to be linked with the engine 4. When the second electric generator 52 is used as a motor, the second electric generator 52 may be used to initiate the engine 4, or the second electric generator 52 may be used to drive the wheel to rotate. When the second electric generator 52 is used as a generator, the engine 4 may drive the second electric generator 52 to generate electricity, and energy transferred from the vehicle may drive, through the output shafts, the second electric generator 52 to generate electricity.

As shown in FIG. 1 to FIG. 12, the power drive system 100 may further include a dual clutch 2d, which has an input end 23d, a first output end 21d, and a second output end 22d, the input end 23d is selectively engaged with at least one of the first output end 21d and the second output end 22d, and the engine 4 is connected with the input end 23d, where the first output end 21d is connected with the first output shaft 21, and the second output end 22d is connected with the second output shaft 22; and where the input end 23d is provided with external teeth for the input end 23d, with which the second electric generator 52 is linked. Since the input end 23d is connected with the engine 4, the second electric generator 52 may be linked with the engine 4 through the input end 23d. A generator shaft of the second electric generator 52 may be fixedly provided with a transmission gear connected with the external teeth for the input end 23d.

It should be understood that specific engagement states of the dual clutch 2d are affected by a control policy, and for a person skilled in the art, the control policy may be set adaptively according to a transmission mode required actually, so that switching may be performed between a plurality of modes as follows: the input end 23d is disengaged from the two output ends, and the input end 23d is engaged with at least one of the two output ends.

The reverse shaft 3 and the reverse output gear 39 mainly have the following two arrangement forms. As shown in FIG. 1 and FIG. 2, a first gear for the reverse shaft 31 which can be engaged with the reverse shaft 3 is idly arranged on the reverse shaft 3, in other words, transmission may be performed between the reverse shaft 3 and the first gear for the reverse shaft 31, and as shown in FIG. 1 and FIG. 2, the reverse shaft 3 may also be provided with a first synchronizer for the reverse shaft 3c, which is used to be engaged with the first gear for the reverse shaft 31. When the first synchronizer for the reverse shaft 3c is used to be engaged with the reverse shaft 3 and the first gear for the reverse shaft 31, transmission is performed between the reverse shaft 3 and the first gear for the reverse shaft 31, and the reverse output gear 39 is linked with the reverse shaft 3. As shown in FIG. 1 and FIG. 2, the reverse shaft 3 may be fixedly provided with a second gear for the reverse shaft 32, which is meshed with the reverse output gear 39. The reverse output gear 39 may be fixed on one of the output shafts. As shown in FIG. 1 and FIG. 2, the reverse output gear 39 is fixed on the second output shaft 22, so that the reverse output gear 39 may be arranged in a reasonable position, which may further reduce the volume of the power drive system 100.

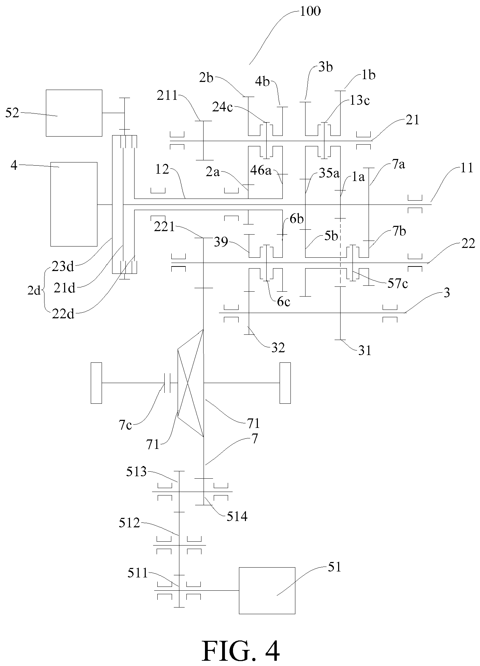

As shown in FIG. 3 and FIG. 4, the first gear for the reverse shaft 31 may also be fixedly arranged on the reverse shaft 3, at this point, the reverse output gear 39 may be idly arranged on one of the output shafts (for example, the second output shaft 22), and the reverse output gear 39 is configured to be engageable with the output shaft. Specifically, the output shaft is also provided with a reverse-gear synchronizer (for example, a sixth-gear synchronizer 6c) that is used to be engaged with the reverse output gear 39, in other words, the reverse-gear synchronizer may be used to be engaged with the reverse output gear 39 and the output shaft, so that the output shaft and the reverse output gear 39 can rotate synchronously, and thus reverse-gear power can be output from the output shaft. Preferably, as shown in FIG. 3 and FIG. 4, the reverse output gear 39 shares the reverse-gear synchronizer with an adjacent gear driven gear (for example, a sixth-gear driven gear 6b). Therefore, this may decrease parts and components of the power drive system 100, enable the axial length of the power drive system 100 to be smaller, and reduce the volume of the power drive system 100.

The first gear for the reverse shaft 31 is meshed with one of the gear driving gears, for example, as shown in FIG. 1, the first gear for the reverse shaft 31 is meshed with a first-gear driving gear 1a, so that the first gear for the reverse shaft 31 together with the first-gear driving gear 1a constitutes a reverse gear pair, and power may be transferred between the reverse shaft 3 and the input shafts.

As shown in FIG. 1 to FIG. 12, the second input shaft 12 is sheathed on the first input shaft 11, which may enable the power drive system 100 to be compact in structure, effectively reduce the axial length of the power drive system 100, make the volume of the power drive system 100 be smaller and facilitate the power drive system 100 being arranged on the vehicle.

Arrangement forms of various gear pairs of a transmission are described below in detail in combination with FIG. 1 to FIG. 8.

As shown in FIG. 1 to FIG. 8, the first input shaft 11 may be provided with the first-gear driving gear 1a, a third and fifth-gear driving gear 35a, and a seventh-gear driving gear 7a, the second input shaft 12 may be provided with a second-gear driving gear 2a and a fourth- and sixth-gear driving gear 46a, and each gear driving gear rotates synchronously with a respective input shaft.

Correspondingly, as shown in FIG. 1 to FIG. 8, the first output shaft 21 is provided with a first-gear driven gear 1b, a second-gear driven gear 2b, a third-gear driven gear 3b, and a fourth-gear driven gear 4b, the second output shaft 22 is provided with a fifth-gear driven gear 5b, a sixth-gear driven gear 6b, and a seventh-gear driven gear 7b, and each gear driven gear is idly mounted on a respective output shaft, that is, each gear driven gear can rotate differentially relative to the respective output shaft.

The first-gear driven gear 1b is meshed with the first-gear driving gear 1a so as to constitute a first gear pair, the second-gear driven gear 2b is meshed with the second-gear driving gear 2a so as to constitute a second gear pair, the third-gear driven gear 3b is meshed with the third and fifth-gear driving gear 35a so as to constitute a third gear pair, the fourth-gear driven gear 4b is meshed with the fourth- and sixth-gear driving gear 46a so as to constitute a fourth gear pair, the fifth-gear driven gear 5b is meshed with the third and fifth-gear driving gear 35a so as to constitute a fifth gear pair, the sixth-gear driven gear 6b is meshed with the fourth- and sixth-gear driving gear 46a so as to constitute a sixth gear pair, the seventh-gear driven gear 7b is meshed with the seventh-gear driving gear 7a so as to constitute a seventh gear pair, and the first-gear driving gear 1a is meshed with the first gear for the reverse shaft 31 so as to constitute a reverse gear pair.

The fourth gear pair and the sixth gear pair share the fourth- and sixth-gear driving gear 46a, and the third gear pair and the fifth gear pair share the third and fifth-gear driving gear 35a, which may decrease two gear driving gears, so that the power drive system 100 may be more compact in structure and smaller in axial dimension.

Since there is an idly mounting structure between the driven gears and the output shafts, a synchronizer needs to be provided to synchronize corresponding driven gears and output shafts, so as to achieve the output of power.

In some embodiments, as shown in combination with FIG. 1 to FIG. 8, the power drive system 100 includes a first- and third-gear synchronizer 13c, a second- and fourth-gear synchronizer 24c, a fifth- and seventh-gear synchronizer 57c, and a sixth-gear synchronizer 6c.

As shown in FIG. 1, the first- and third-gear synchronizer 13c is arranged on the first output shaft 21 and located between the first-gear driven gear 1b and the third-gear driven gear 3b, and the first- and third-gear synchronizer 13c may engage the first-gear driven gear 1b or the third-gear driven gear 3b with the first output shaft 21, so that the driven gear and the output shaft can rotate synchronously.

For example, as shown in combination with FIG. 1, when an engagement sheath of the first- and third-gear synchronizer 13c moves left, the third-gear driven gear 3b may be engaged with the first output shaft 21, so that the third-gear driven gear 3b and the first output shaft 21 can rotate synchronously. When the engagement sheath of the first- and third-gear synchronizer 13c moves right, the first-gear driven gear 1b may be engaged with the first output shaft 21, so that the first-gear driven gear 1b and the first output shaft 21 can rotate synchronously.

As shown in FIG. 1, similarly, the second- and fourth-gear synchronizer 24c is arranged on the first output shaft 21 and located between the second-gear driven gear 2b and the fourth-gear driven gear 4b, and the second- and fourth-gear synchronizer 24c may engage the second-gear driven gear 2b or the fourth-gear driven gear 4b with the first output shaft 21, so that the driven gear and the output shaft can rotate synchronously.

For example, as shown in combination with FIG. 1, when an engagement sheath of the second- and fourth-gear synchronizer 24c moves left, the second-gear driven gear 2b may be engaged with the first output shaft 21, so that the second-gear driven gear 2b and the first output shaft 21 rotate synchronously. When the engagement sheath of the second- and fourth-gear synchronizer 24c moves right, the fourth-gear driven gear 4b may be engaged with the first output shaft 21, so that the fourth-gear driven gear 4b and the first output shaft 21 rotate synchronously.

As shown in FIG. 1, similarly, the fifth- and seventh-gear synchronizer 57c is arranged on the second output shaft 22, the fifth- and seventh-gear synchronizer 57c is located between the fifth-gear driven gear 5b and the seventh-gear driven gear 7b, and the fifth- and seventh-gear synchronizer 57c is used to engage the fifth-gear driven gear 5b or the seventh-gear driven gear 7b with the second output shaft 22, for example, when an engagement sheath of the fifth- and seventh-gear synchronizer 57c moves right, the seventh-gear driven gear 7b may be engaged with the second output shaft 22, so that the seventh-gear driven gear 7b and the second output shaft 22 rotate synchronously. In another example, when the engagement sheath of the fifth- and seventh-gear synchronizer 57c moves left, the fifth-gear driven gear 5b may be engaged with the second output shaft 22, so that the fifth-gear driven gear 5b and the second output shaft 22 rotate synchronously.

As shown in FIG. 1, similarly, the sixth-gear synchronizer 6c is arranged on the second output shaft 22, the sixth-gear synchronizer 6c is located on one side of the sixth-gear driven gear 6b, for example, on the left side, and the sixth-gear synchronizer 6c is used to engage the sixth-gear driven gear 6b with the second output shaft 22, for example, when an engagement sheath of the sixth-gear synchronizer 6c moves right, the sixth-gear driven gear 6b may be engaged with the second output shaft 22, so that the sixth-gear driven gear 6b and the second output shaft 22 rotate synchronously.

As shown in FIG. 3, FIG. 4, FIG. 7, and FIG. 8, the reverse output gear 39 and the sixth-gear driven gear 6b are arranged adjacent to each other so as to share the sixth-gear synchronizer 6c, so that the sixth-gear synchronizer 6c constitutes the reverse-gear synchronizer. As shown in combination with FIG. 3, FIG. 4, FIG. 7, and FIG. 8, when the engagement sheath of the sixth-gear synchronizer 6c moves left, the reverse output gear 39 may be engaged, and when it moves right, the sixth-gear driven gear 6b may be engaged.

In some embodiments, as shown in FIG. 1, distances between the second-gear driving gear 2a, the fourth- and sixth-gear driving gear 46a, the third and fifth-gear driving gear 35a, the first-gear driving gear 1a, and the seventh-gear driving gear 7a from the engine 4 increase gradually. Therefore, gears are arranged more reasonably, the power drive system 100 is more compact, and radial and axial dimensions are relatively smaller.

For a power drive system 100 with the reverse output gear 39 fixedly arranged on the second output shaft 22, the first gear for the reverse shaft 31 is idly mounted on the reverse shaft 3, and the reverse shaft 3 is provided with a first synchronizer for the reverse shaft 3c that is used to be engaged with the first gear for the reverse shaft 31, where the sixth-gear synchronizer 6c is located on the left side of the sixth-gear driven gear 6b, and the first synchronizer for the reverse shaft 3c is located on the right side of the first gear for the reverse shaft 31, so that the first synchronizer for the reverse shaft 3c and the sixth-gear synchronizer 6c may share the same shifting yoke mechanism, the sixth-gear synchronizer 6c is separated from the sixth-gear driven gear 6b when the shifting yoke mechanism drives the first synchronizer for the reverse shaft 3c to be engaged with the first gear for the reverse shaft 31, and the first synchronizer for the reverse shaft 3c is separated from the first gear for the reverse shaft 31 when the shifting yoke mechanism drives the sixth-gear synchronizer 6c to be engaged with the sixth-gear driven gear 6b. Specifically, when the shifting yoke mechanism drives an engagement sheath to move left, the first synchronizer for the reverse shaft 3c is engaged with the first gear for the reverse shaft 31 and the sixth-gear synchronizer 6c is separated from the sixth-gear driven gear 6b, and when the shifting yoke mechanism drives the engagement sheath to move right, the sixth-gear synchronizer 6c is engaged with the sixth-gear driven gear 6b and the first synchronizer for the reverse shaft 3c is separated from the first gear for the reverse shaft 31. Therefore, one shifting yoke mechanism may be omitted for the power drive system 100, so that the power drive system 100 may be simple in structure and light in weight.

Arrangement forms of various gear pairs of another transmission are described below in detail in combination with FIG. 9 to FIG. 12.

As shown in FIG. 9 to FIG. 12, the first input shaft 11 may be provided with the first-gear driving gear 1a, a third-gear driving gear 3a, a seventh-gear driving gear 5a, and a seventh-gear driving gear 7a, the second input shaft 12 may be provided with a second-gear driving gear 2a and a fourth- and sixth-gear driving gear 46a, and each gear driving gear rotates synchronously with a respective input shaft.

Correspondingly, as shown in FIG. 9 to FIG. 12, the first output shaft 21 is provided with a first-gear driven gear 1b, a second-gear driven gear 2b, a third-gear driven gear 3b, and a fourth-gear driven gear 4b, the second output shaft 22 is provided with a fifth-gear driven gear 5b, a sixth-gear driven gear 6b, and a seventh-gear driven gear 7b, and each gear driven gear is idly mounted on a respective output shaft, that is, each gear driven gear can rotate differentially relative to the respective output shaft.

The first-gear driven gear 1b is meshed with the first-gear driving gear 1a so as to constitute a first gear pair, the second-gear driven gear 2b is meshed with the second-gear driving gear 2a so as to constitute a second gear pair, the third-gear driven gear 3b is meshed with the third-gear driving gear 3a so as to constitute a third gear pair, the fourth-gear driven gear 4b is meshed with the fourth- and sixth-gear driving gear 46a so as to constitute a fourth gear pair, the fifth-gear driven gear 5b is meshed with the fifth-gear driving gear 5a so as to constitute a fifth gear pair, the sixth-gear driven gear 6b is meshed with the fourth- and sixth-gear driving gear 46a so as to constitute a sixth gear pair, and the seventh-gear driven gear 7b is meshed with the seventh-gear driving gear 7a so as to constitute a seventh gear pair.

The fourth gear pair and the sixth gear pair share the fourth- and sixth-gear driving gear 46a, which may decrease one gear driving gear, so that the power drive system 100 may be more compact in structure and smaller in axial dimension.

Since there is an idly mounting structure between the driven gears and the output shafts, a synchronizer needs to be provided to synchronize corresponding driven gears and output shafts, so as to achieve the output of power.

In some embodiments, as shown in combination with FIG. 9 to FIG. 12, the power drive system 100 includes a first- and third-gear synchronizer 13c, a second- and fourth-gear synchronizer 24c, a fifth- and seventh-gear synchronizer 57c, and a sixth-gear synchronizer 6c.

As shown in FIG. 9, the first- and third-gear synchronizer 13c is arranged on the first output shaft 21 and located between the first-gear driven gear 1b and the third-gear driven gear 3b, and the first- and third-gear synchronizer 13c may engage the first-gear driven gear 1b or the third-gear driven gear 3b with the first output shaft 21, so that the driven gear and the output shaft can rotate synchronously.

For example, as shown in combination with FIG. 9, when an engagement sheath of the first- and third-gear synchronizer 13c moves left, the third-gear driven gear 3b may be engaged with the first output shaft 21, so that the third-gear driven gear 3b and the first output shaft 21 can rotate synchronously. When the engagement sheath of the first- and third-gear synchronizer 13c moves right, the first-gear driven gear 1b may be engaged with the first output shaft 21, so that the first-gear driven gear 1b and the first output shaft 21 can rotate synchronously.

As shown in FIG. 9, similarly, the second- and fourth-gear synchronizer 24c is arranged on the first output shaft 21 and located between the second-gear driven gear 2b and the fourth-gear driven gear 4b, and the second- and fourth-gear synchronizer 24c may engage the second-gear driven gear 2b or the fourth-gear driven gear 4b with the first output shaft 21, so that the driven gear and the output shaft can rotate synchronously.

For example, as shown in combination with FIG. 9, when an engagement sheath of the second- and fourth-gear synchronizer 24c moves left, the second-gear driven gear 2b may be engaged with the first output shaft 21, so that the second-gear driven gear 2b and the first output shaft 21 rotate synchronously. When the engagement sheath of the second- and fourth-gear synchronizer 24c moves right, the fourth-gear driven gear 4b may be engaged with the first output shaft 21, so that the fourth-gear driven gear 4b and the first output shaft 21 rotate synchronously.

As shown in FIG. 9, similarly, the fifth- and seventh-gear synchronizer 57c is arranged on the second output shaft 22, the fifth- and seventh-gear synchronizer 57c is located between the fifth-gear driven gear 5b and the seventh-gear driven gear 7b, and the fifth- and seventh-gear synchronizer 57c is used to engage the fifth-gear driven gear 5b or the seventh-gear driven gear 7b with the second output shaft 22, for example, when an engagement sheath of the fifth- and seventh-gear synchronizer 57c moves right, the seventh-gear driven gear 7b may be engaged with the second output shaft 22, so that the seventh-gear driven gear 7b and the second output shaft 22 rotate synchronously. In another example, when the engagement sheath of the fifth- and seventh-gear synchronizer 57c moves left, the fifth-gear driven gear 5b may be engaged with the second output shaft 22, so that the fifth-gear driven gear 5b and the second output shaft 22 rotate synchronously.

As shown in FIG. 9, similarly, the sixth-gear synchronizer 6c is arranged on the second output shaft 22, the sixth-gear synchronizer 6c is located on one side of the sixth-gear driven gear 6b, for example, on the left side, and the sixth-gear synchronizer 6c is used to engage the sixth-gear driven gear 6b with the second output shaft 22, for example, when an engagement sheath of the sixth-gear synchronizer 6c moves right, the sixth-gear driven gear 6b may be engaged with the second output shaft 22, so that the sixth-gear driven gear 6b and the second output shaft 22 rotate synchronously.

In some embodiments, as shown in FIG. 9, the distances between the second-gear driving gear 2a, the fourth- and sixth-gear driving gear 46a, the third-gear driving gear 3a, the fifth-gear driving gear 5a, the first-gear driving gear 1a, and the seventh-gear driving gear 7a from the engine 4 increase gradually. Therefore, gears are arranged more reasonably, the power drive system 100 is more compact, and radial and axial dimensions are relatively smaller.

The first gear for the reverse shaft 31 is idly mounted on the reverse shaft 3, and the reverse shaft 3 is provided with a first synchronizer for the reverse shaft 3c that is used to be engaged with the first gear for the reverse shaft 31, where the sixth-gear synchronizer 6c is located on the left side of the sixth-gear driven gear, and the first synchronizer for the reverse shaft 3c is located on the right side of the first gear for the reverse shaft 31, so that the first synchronizer for the reverse shaft 3c and the sixth-gear synchronizer 6c may share the same shifting yoke mechanism, the sixth-gear synchronizer 6c is separated from the sixth-gear driven gear 6b when the shifting yoke mechanism drives the first synchronizer for the reverse shaft 3c to be engaged with the first gear for the reverse shaft 31, and the first synchronizer for the reverse shaft 3c is separated from the first gear for the reverse shaft 31 when the shifting yoke mechanism drives the sixth-gear synchronizer 6c to be engaged with the sixth-gear driven gear 6b. Specifically, when the shifting yoke mechanism drives an engagement sheath to move left, the first synchronizer for the reverse shaft 3c is engaged with the first gear for the reverse shaft 31 and the sixth-gear synchronizer 6c is separated from the sixth-gear driven gear 6b, and when the shifting yoke mechanism drives the engagement sheath to move right, the sixth-gear synchronizer 6c is engaged with the sixth-gear driven gear 6b and the first synchronizer for the reverse shaft 3c is separated from the first gear for the reverse shaft 31. Therefore, one shifting yoke mechanism may be omitted for the power drive system 100, so that the power drive system 100 may have a simple structure and light weight.

The first gear for the reverse shaft 31 is linked with one of a plurality of driving gears, in which as shown in FIG. 9, an intermediate idle gear 311 is provided between the first gear for the reverse shaft 31 and one of the gear driving gears, the intermediate idle gear 311 is a dual gear, and the dual gear is idly mounted on one of the output shafts (for example, the second output shaft 22).

Specifically, as shown in FIG. 9 to FIG. 12, the reverse shaft 3 is also fixedly provided with a first motor gear 33, and transmission is performed between the first electric generator 51 and the first motor gear 33 through the first transmission gear 511 and the second transmission gear 512, where the first transmission gear 511 is fixed on the generator shaft of the first electric generator 51, and the second transmission gear 512 is meshed between the first transmission gear 511 and the first motor gear 33.

As shown in FIG. 9 to FIG. 12, a plurality of output shafts and the reverse shaft 3 are linked with the differential power input portion (that is, the differential power input gear 7) respectively. The reverse shaft 3 is fixedly provided with an output gear for the reverse shaft 38, and when the first synchronizer for the reverse shaft 3c is used to be engaged with the reverse shaft 3 and the first gear for the reverse shaft 31, transmission is performed between the reverse shaft 3 and the differential power input gear 7 through the output gear for the reverse shaft 38. As such, an output gear for the output shaft and the output gear for the reverse shaft 38 together constitute the transmission power output portion.

Working modes of the power drive system 100 according to the embodiments of the present disclosure are described below in detail by taking the power drive system 100 shown in FIG. 1 as an example.

A parking electricity generation mode: the power engagement device 7c is in a disengaged state, a brake system of the vehicle brakes wheels, in which the brake system may be a driving brake system or a parking brake system, so that power of the engine 4 is transferred to the differential power input gear 7, and the differential power input gear 7 is linked with the first electric generator 51, so that the first electric generator 51 may be used as a generator.

A driving electricity generation mode: the power engagement device 7c is in an engaged state, part of the power transferred to the differential power input gear 7 may be used to drive the vehicle to move, and another part of the power may be used by the first electric generator 51 to generate electricity.

An electric-only mode: the first electric generator 51 is used as a motor, and power of the first electric generator 51 is transferred to the wheels through the first transmission gear 511, the second transmission gear 512, the first motor gear 33, the reverse shaft 3, the second gear for the reverse shaft 32, the reverse output gear 39, the second output shaft 22, the output gear for the second output shaft 221, and the differential power input gear 7 in sequence so as to drive the vehicle to move.

An energy recovery mode: energy transferred from the wheels is transferred to the first electric generator 51 through the differential power input gear 7, the output gear for the second output shaft 221, the second output shaft 22, the reverse output gear 39, the second gear for the reverse shaft 32, the reverse shaft 3, the first motor gear 33, the second transmission gear 512, and the first transmission gear 511 in sequence, and at this point, the first electric generator 51 is used as a generator.

Working modes of the power drive system 100 shown in FIG. 3, FIG. 5, FIG. 7, FIG. 9 and FIG. 11 are substantially the same as the working modes of the power drive system 100 shown in FIG. 1, and will not be described here in detail.

Working modes of the power drive system 100 according to the embodiments of the present disclosure are described below in detail by taking the power drive system 100 shown in FIG. 2 as an example.

Parking electricity generation mode one: the power engagement device 7c is in a disengaged state, the brake system of the vehicle brakes the wheels, in which the brake system may be a driving brake system or a parking brake system, so that the power of the engine 4 is transferred to the differential power input gear 7, the differential power input gear 7 is linked with the first electric generator 51, and thus the first electric generator 51 may be used as a generator.

Parking electricity generation mode two: the input end 23d of the dual clutch 2d is disengaged from the first output end 21d and the second output end 22d respectively, so that all the power of the engine 4 is used by the second electric generator 52 to generate electricity.

Parking electricity generation mode three: the power engagement device 7c is in a disengaged state, the brake system of the vehicle brakes the wheels, in which the brake system may be a driving brake system or a parking brake system, so that part of the power of the engine 4 is transferred to the differential power input gear 7, the differential power input gear 7 is linked with the first electric generator 51, and thus the first electric generator 51 may be used as a generator. Another part of the power of the engine 4 is used by the second electric generator 52 to generate electricity.

Driving electricity generation mode one: the power engagement device 7c is in an engaged state, part of the power transferred to the differential power input gear 7 may be used to drive the vehicle to move, and another part of the power may be used by the first electric generator 51 to generate electricity.

Driving electricity generation mode two: the input end 23d of the dual clutch 2d is disengaged from the first output end 21d and the second output end 22d respectively, so that part of the power of the engine 4 is used by the second electric generator 52 to generate electricity, and another part of the power of the engine 4 is used to drive the vehicle.

Driving electricity generation mode three: the power engagement device 7c is in an engaged state, the brake system of the vehicle brakes the wheels, in which the brake system may be a driving brake system or a parking brake system, so that part of the power of the engine 4 is transferred to the differential power input gear 7, the differential power input gear 7 is linked with the first electric generator 51, and thus the first electric generator 51 may be used as a generator. Another part of the power of the engine 4 is used by the second electric generator 52 to generate electricity. Still another part of the power of the engine 4 is used to drive the vehicle.

Electric-only mode one: the first electric generator 51 is used as a motor, and power of the first electric generator 51 is transferred to the wheels through the first transmission gear 511, the second transmission gear 512, the first motor gear 33, the reverse shaft 3, second gear for the reverse shaft 32, the reverse output gear 39, the second output shaft 22, the output gear for the second output shaft 221, and the differential power input gear 7 in sequence so as to drive the vehicle to move.

Electric-only mode two: the second electric generator 52 is used as a motor, detailed description is made below by taking a first gear as an example, the input end 23d of the dual clutch 2d is connected with the first output end 21d, the first- and third-gear synchronizer 13c is engaged with the first-gear driven gear 1b and the first output shaft 21, and the power of the second electric generator 52 is transferred to the wheels through the first-gear driving gear 1a, the first-gear driven gear 1b, the first- and third-gear synchronizer 13c, the first output shaft 21, the output gear for the first output shaft 211, and the differential power input gear 7 in sequence so as to drive the vehicle to move. Other gear transfer processes are similar to that of the first gear, and will not be described here in detail. In this process, the engine 4 may be idle.

Electric-only mode three: the first electric generator 51 and the second electric generator 52 are used as motors simultaneously, and the power of the first electric generator 51 and the power of the second electric generator 52 are coupled at the differential power input gear 7 and then transferred to the wheels to drive the vehicle to move.

An energy recovery mode: energy transferred from the wheels is transferred to the first electric generator 51 through the differential power input gear 7, the output gear for the second output shaft 221, the second output shaft 22, the reverse output gear 39, the second gear for the reverse shaft 32, the reverse shaft 3, the first motor gear 33, the second transmission gear 512, and the first transmission gear 511 in sequence, and at this point, the first electric generator 51 is used as a generator.

Working modes of the power drive system 100 shown in FIG. 4, FIG. 6, FIG. 8, FIG. 10, and FIG. 12 are substantially the same as the working modes of the power drive system 100 shown in FIG. 2, and will not be described here in detail.

The power drive system 100 according to the embodiments of the present disclosure may implement the parking electricity generation mode, and thus may enrich the working modes of the power drive system 100 and improve the power performance and economy of the vehicle.

Since the first electric generator 51 is linked with the differential power input gear 7 or the reverse shaft 3, the first electric generator 51 has very high transmission efficiency, and this may avoid the problem that an electric-only mode may be achieved only by complex gear shift and transmission chains in a transmission in a traditional power drive system 100, so that the electric-only mode has less components required for transmission, with reliable transmission processes and high transmission efficiency.

Additionally, for control logics, a control logic of the engine 4 and a control logic of the first electric generator 51 are independent of each other, which may save the time and cost of development for manufacturers and avoid higher malfunction rates of the power drive system 100.

Furthermore, a vehicle including the power drive system 100 as described above is further provided according to the embodiments of the present disclosure. It should be noted that other components of the vehicle according this embodiment of the present disclosure such as a driving system, a steering system, and a braking system are all existing technologies well known to a person of ordinary skill in the art, and therefore detailed descriptions of such known structures are omitted herein.

In the descriptions of this specification, descriptions of reference terms "one embodiment", "some embodiments", "an example", "a specific example", or "some examples" are intended to indicate that particular features, structures, materials, or characteristics described with reference to the embodiment or example are included in at least one embodiment or example of the present disclosure. In this specification, schematic descriptions of the foregoing terms do not need to aim at a same embodiment or example. Besides, the specific features, the structures, the materials or the characteristics that are described may be combined in a proper manner in any one or more embodiments or examples. In addition, in a case that is not mutually contradictory, persons skilled in the art can combine or group different embodiments or examples that are described in this specification and features of the different embodiments or examples.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A power drive system for a vehicle, comprising:
an engine;
a transmission having a transmission power output portion;
a first electric generator, the engine and the first electric generator being connected through the transmission by means of power coupling; and
a differential having a differential power input portion and two differential power output portions, the differential power input portion being linked with the transmission power output portion, each of the differential power output portions being connected with a wheel on the same side, and a power engagement device being provided between one of the differential power output portions and the wheel on the same side.

2. The power drive system for a vehicle according to claim 1, wherein the power engagement device is a synchronizer.

3. The power drive system for a vehicle according to claim 1, wherein the power engagement device is a clutch.

4. The power drive system for a vehicle according to any of claims 1 to 3, wherein the first electric generator is linked with the differential power input portion.

5. The power drive system for a vehicle according to claim 1, wherein the transmission comprises:
a plurality of input shafts, the engine being configured to be selectively engaged with at least one of the plurality of input shafts each provided with a gear driving gear;
a plurality of output shafts each provided with a gear driven gear, a plurality of gear driven gears being meshed with a plurality of gear driving gears correspondingly;
a reverse shaft provided with a first gear for the reverse shaft, the first gear for the reverse shaft being meshed with one of the gear driving gears; and
a reverse output gear linked with the reverse shaft.

6. The power drive system for a vehicle according to claim 5, wherein the reverse shaft is provided with a first motor gear, with which the first electric generator is linked.

7. The power drive system for a vehicle according to claim 5, wherein the first gear for the reverse shaft is idly arranged on the reverse shaft.

8. The power drive system for a vehicle according to claim 7, wherein the power drive system further comprises: a first synchronizer for the reverse shaft to be engaged with the reverse shaft and the first gear for the reverse shaft.

9. The power drive system for a vehicle according to claim 8, wherein the reverse output gear is fixed on one of the output shafts.

10. The power drive system for a vehicle according to claim 5, wherein the first gear for the reverse shaft is fixed on the reverse shaft.

11. The power drive system for a vehicle according to claim 10, wherein the reverse output gear is idly mounted on one of the output shafts and the reverse output gear is configured to be engageable with the one of the output shafts.

12. The power drive system for a vehicle according to claim 10, further comprising: a reverse-gear synchronizer to be engaged with the reverse output gear and the one of the output shafts.

13. The power drive system for a vehicle according to claim 11, wherein the reverse output gear shares the reverse-gear synchronizer with an adjacent gear driven gear.

14. The power drive system for a vehicle according to claim 5, wherein the reverse shaft is fixedly provided with a second gear for the reverse shaft, which is meshed with the reverse output gear.

15. The power drive system for a vehicle according to claim 5, wherein each of the output shafts is fixedly provided with an output gear for the output shaft, a plurality of output gears for the output shaft are meshed with the differential power input portion respectively, and the plurality of output gears for the output shaft constitute the transmission power output portion.

16. The power drive system for a vehicle according to claim 1, wherein the transmission comprises:
a plurality of input shafts, the engine being configured to be selectively engaged with at least one of the plurality of input shafts each provided with a gear driving gear;
a plurality of output shafts each provided with a gear driven gear, a plurality of gear driven gears being meshed with a plurality of gear driving gears correspondingly; and
a reverse shaft idly arranged with a first gear for the reverse shaft engageable with the reverse shaft, the first gear for the reverse shaft being linked with one of the gear driving gears, wherein
the plurality of output shafts and the reverse shaft are linked with the differential power input portion respectively.

17. The power drive system for a vehicle according to claim 16, wherein each of the output shafts is fixedly provided with an output gear for the output shaft, the reverse shaft is fixedly provided with an output gear for the reverse shaft, the output gear for the output shaft and the output gear for the reverse shaft are meshed with the differential power input portion respectively, and the output gear for the output shaft and the output gear for the reverse shaft constitute the transmission power output portion.

18. The power drive system for a vehicle according to claim 16, wherein the reverse shaft is fixedly provided with a first motor gear, which is linked with the first electric generator.

19. The power drive system for a vehicle according to claim 16, further comprising: a first synchronizer for the reverse shaft to be engaged with the reverse shaft and the first gear for the reverse shaft.

20. The power drive system for a vehicle according to claim 16, wherein an intermediate idle gear is provided between the first gear for the reverse shaft and the one of the gear driving gears.

21. The power drive system for a vehicle according to claim 20, wherein the intermediate idle gear is a dual gear and idly mounted on one of the output shafts.

22. The power drive system for a vehicle according to claim 1, further comprising: a second electric generator configured to be linked with the engine.

23. The power drive system for a vehicle according to claim 22, further comprising:
a dual clutch having an input end, a first output end, and a second output end, the input end being selectively engaged with at least one of the first output end and the second output end, and the engine being connected with the input end.

24. The power drive system for a vehicle according to claim 23, wherein the input end is provided with external teeth for the input end, with which the second electric generator is linked.

25. The power drive system for a vehicle according to claim 23, wherein
the input shafts comprise: a first input shaft and a second input shaft sheathed on the first input shaft, the first input shaft being connected with the first output end, and the second input shaft being connected with the second output end; and
the output shafts comprise: a first output shaft and a second output shaft.

26. A vehicle, comprising the power drive system according to any of claims 1 to 25.
